# EUROPEAN PATENT APPLICATION

(11) **EP 4 800 078 A1**
(43) Date of publication of application: **02.09.2026**
(21) Application number: 24881948.4
(22) Date of filing: 24.05.2024
(51) Int. Cl.: C09D 5/16, C09D 201/00

(54) **AQUATIC ORGANISM ADHESION-INHIBITING ANTIFOULING AGENT, AQUATIC ORGANISM ADHESION-INHIBITING ANTIFOULING AGENT COMPOSITION, AQUATIC ORGANISM ADHESION-INHIBITING CURED ANTIFOULING AGENT, ANTIFOULING COATING FILM, AND SUBSTRATE EQUIPPED WITH ANTIFOULING COATING FILM**

(30) Priority: 24.10.2023 JP 2023182740
(71) Applicant: DIC Corporation, Tokyo 174-8520 (JP)
(72) Inventor: NAKANO, Hiroaki, Ichihara-shi, Chiba 290-8585 (JP); UJIGAWA, Mari, Ichihara-shi, Chiba 290-8585 (JP)
(74) Representative: Kraus & Lederer PartGmbB
(86) International application number: PCT/JP2024/019301
(87) International publication number: WO 2025/088830

(57) **Abstract**

Provided is an aquatic organism adhesion-inhibiting antifouling agent for preventing adhesion of an aquatic organism. Specifically, the aquatic organism adhesion-inhibiting antifouling agent for preventing adhesion of an aquatic organism contains a fatty acid metal salt including a fatty acid component having 1 to 22 carbon atoms and a metal component, and the metal component is lithium, sodium, potassium, rubidium, cesium, boron, magnesium, aluminum, calcium, manganese, iron, cobalt, cobalt borate, nickel, antimony, copper, silver, zinc, molybdenum, vanadium, strontium, zirconium, barium, bismuth, lead, gold, platinum, or rare earth.

## Description

### Technical Field

The present disclosure relates to an aquatic organism adhesion-inhibiting antifouling agent, an aquatic organism adhesion-inhibiting antifouling agent composition, an aquatic organism adhesion-inhibiting cured antifouling agent, an antifouling coating film, and a substrate equipped with an antifouling coating film.

### Background Art

A wide variety of aquatic organisms tend to adhere to the surfaces of substrates (ships, underwater structures, fishing nets, seawater supply and drainage pipes in factories, etc.) exposed to water in a natural environment (marine, river, lakes and marshes, etc.) for an extended period of time. A substrate surface to which aquatic organisms adhere impairs the appearance and causes various defects.

For example, when the substrate is a ship, adhesion of aquatic organisms to the ship increases the resistance of an adhesion surface caused by water flow. Thus, the ship speed decreases and fuel cost increases. When the substrate is an underwater structure, an anticorrosive coating film applied to the substrate surface of the underwater structure is damaged to cause problems, such as a reduction in strength and function of the underwater structure and a significant reduction in life span of the underwater structure.

Furthermore, when the substrate is a fishing net, such as an aquaculture net or a fixed net, the mesh of the fishing net is clogged with aquatic organisms to cause significant problems, such as death of aquaculture organisms and captured organisms due to oxygen deficiency. Moreover, when aquatic organisms adhere to a seawater supply and drainage pipe in factories, thermal and atomic power stations, and the like and reproduce, the supply and drainage pipe may be clogged and the flow rate may be reduced.

In order to prevent adhesion of aquatic organisms that causes the problems, an antifouling coating material is applied to the surface of the substrate to form an antifouling coating film.

Although as an antifouling agent used in such an antifouling coating material, cuprous oxide has been widely used to exhibit excellent antifouling performance against adhesion of aquatic organisms, an alternative substance to cuprous oxide has been investigated in recent years. For example, the development of an antifouling coating material including medetomidine as an antifouling agent has proceeded in PTL 1.

### Citation List

### Patent Literature

PTL 1: Japanese Unexamined Patent Application Publication (Translation of PCT Application) No. 2022-028627

### Summary of Invention

### Technical Problem

As an alternative substance to cuprous oxide for an antifouling agent, a substance such as Irgarol (Cybutryne) has also been investigated in addition to medetomidine described above. The inventors of the present disclosure have investigated an antifouling agent that is alternative to a substance used as a conventionally known antifouling agent. An object of the present disclosure is to provide an aquatic organism adhesion-inhibiting antifouling agent for preventing adhesion of aquatic organisms, an aquatic organism adhesion-inhibiting antifouling agent composition, an aquatic organism adhesion-inhibiting cured antifouling agent, an antifouling coating film, and a substrate equipped with an antifouling coating film.

### Solution to Problem

The inventors of the present disclosure have intensively studied to solve the above-mentioned problems, and as a result, found that a specific fatty acid metal salt is effective as an aquatic organism adhesion-inhibiting antifouling agent, and completed embodiments according to the present disclosure. Specifically, components of outline of the present disclosure are as follows.

[1] An aquatic organism adhesion-inhibiting antifouling agent for preventing adhesion of an aquatic organism, the aquatic organism adhesion-inhibiting antifouling agent containing a fatty acid metal salt including a fatty acid component having 1 to 22 carbon atoms and a metal component, in which
   the metal component is lithium, sodium, potassium, rubidium, cesium, boron, magnesium, aluminum, calcium, manganese, iron, cobalt, cobalt borate, nickel, antimony, copper, silver, zinc, molybdenum, vanadium, strontium, zirconium, barium, bismuth, lead, gold, platinum, or rare earth.
[2] The aquatic organism adhesion-inhibiting antifouling agent according to [1], in which the aquatic organism is a barnacle, a mussel, Limnoperna fortunei, or a polychaete worm.
[3] The aquatic organism adhesion-inhibiting antifouling agent according to [1] or [2], in which the fatty acid component is 2-ethylhexanoic acid, neodecanoic acid, isononanoic acid, naphthenic acid, stearic acid, isostearic acid, palmitic acid, lauric acid, or myristic acid.
[4] The aquatic organism adhesion-inhibiting antifouling agent according to any one of [1] to [3], in which the metal component is copper, zinc, bismuth, lead, cobalt borate, or rare earth.
[5] The aquatic organism adhesion-inhibiting antifouling agent according to any one of [1] to [4], in which the fatty acid component is 2-ethylhexanoic acid, neodecanoic acid, or stearic acid, and the metal component is copper, zinc, bismuth, or rare earth.
[6] An aquatic organism adhesion-inhibiting antifouling agent composition containing the aquatic organism adhesion-inhibiting antifouling agent according to any one of [1] to [5] and a solvent.
[7] The organism adhesion-inhibiting antifouling agent composition according to [6], further containing a binder resin.
[8] An aquatic organism adhesion-inhibiting cured antifouling agent obtained by curing the aquatic organism adhesion-inhibiting antifouling agent composition according to [6] or [7].
[9] An antifouling coating film formed from the aquatic organism adhesion-inhibiting cured antifouling agent according to [8].
[10] A substrate equipped with an antifouling coating film including a substrate and the antifouling coating film according to [9] on a surface of the substrate.
[11] The substrate equipped with an antifouling coating film according to [10], in which the substrate is at least one selected from a ship, an underwater structure, a fishery material, and a supply and drainage pipe.

### Advantageous Effects of Invention

An embodiment of the present invention can provide an aquatic organism adhesion-inhibiting antifouling agent for preventing adhesion of an aquatic organism.

An embodiment of the present invention can provide an aquatic organism adhesion-inhibiting antifouling agent composition for preventing adhesion of an aquatic organism.

An embodiment of the present invention can provide an aquatic organism adhesion-inhibiting cured antifouling agent for preventing adhesion of an aquatic organism.

An embodiment of the present invention can provide an antifouling coating film for preventing adhesion of an aquatic organism.

An embodiment of the present invention can provide a substrate equipped with an antifouling coating film for preventing adhesion of an aquatic organism.

### Description of Embodiments

Hereinafter, an embodiment of the present invention will be described. The present invention is not limited to the following embodiments, and the present invention can be appropriately modified and carried out within a range that does not impair the effects of the present invention without departing from the spirit of the present invention disclosed herein.

### (Aquatic Organism Adhesion-inhibiting Antifouling Agent)

An aquatic organism adhesion-inhibiting antifouling agent according to the present embodiment contains a fatty acid metal salt including a fatty acid component having 1 to 22 carbon atoms and a metal component, and the metal component is lithium, sodium, potassium, rubidium, cesium, boron, magnesium, aluminum, calcium, manganese, iron, cobalt, cobalt borate, nickel, antimony, copper, silver, zinc, molybdenum, vanadium, strontium, zirconium, barium, bismuth, lead, gold, platinum, or rare earth. The aquatic organism adhesion-inhibiting antifouling agent prevents adhesion of an aquatic organism.

The aquatic organism used herein includes marine organisms and freshwater organisms, and also includes mollusks.

The aquatic organism refers to a fouling organism in a narrow sense. A phenomenon in which organisms form colonies on an artifact placed in water or an artifact in contact with water (particularly the surface of the artifact) and as a result, adversely affects the artificial structures refers to "fouling". Fouling organisms refer to organisms causing this "fouling".

The aquatic organism adhesion-inhibiting antifouling agent of the present disclosure can specifically inhibit adhesion of organisms that float in the sea or freshwater during their larval stage, and at a certain point, adhere to an appropriate base, metamorphose into an adult, and switch to a sessile lifestyle. For example, the aquatic organism adhesion-inhibiting antifouling agent of the present invention can inhibit settlement of barnacles, mussels, hydrozoans, jellyfish polyps, Limnoperna fortunei, and the like. In addition, the aquatic organism adhesion-inhibiting antifouling agent of the present disclosure can inhibit settlement of polychaete worms that can secrete a calcareous substance and attach to a base.

The aquatic organism adhesion-inhibiting antifouling agent of the present disclosure contains the fatty acid metal salt. It is conceived that when aquatic organisms begin to adhere (attach) to the surface of a coating film using an adhesive component formed of protein, the fatty acid metal salt is coordinated with a nitrogen moiety or amide bond of the protein to modify the protein structure, and the adhesion of the aquatic organisms to the surface of the coating film can be inhibited.

Hereinafter, details of the aquatic organism adhesion-controlling antifouling agent according to the present embodiment will be described.

### <Fatty Acid Metal Salt>

The fatty acid metal salt contained in the aquatic organism adhesion-inhibiting antifouling agent according to the present embodiment is, for example, a compound represented by the following general formula (1). Details of the fatty acid component and the metal component will be described.

**(R¹COO)ₙ₁M¹** (1)

### [Chem. 1]

(In the general formula (1), R¹ is a hydrogen atom or an alkyl group having 1 to 21 carbon atoms, n1 is an integer ranging from 1 to 4, and M¹ is a metal component.)

### <<Fatty Acid Component>>

When n1 is an integer of 2 or more in a fatty acid component represented by (R¹COO)ₙ₁ of the general formula (1), a plurality of R¹s may be the same as or different from each other.

An alkyl group having 1 to 21 of R¹ may be a linear alkyl group or a branched alkyl group, or have an alicyclic structure.

A hydrogen atom or an alkyl group having 1 to 21 carbon atoms of R¹ corresponds to a carboxylic acid residue except a carboxy group (COOH) from carboxylic acid having 1 to 22 carbon atoms that is used in production of a fatty acid metal salt and is represented by R¹COOH. Examples of the carboxylic acid residue include a formic acid residue, an acetic acid residue, a propionic acid residue, a butanoic acid residue, a pentanoic acid residue, a hexanoic acid residue, a 2-ethylbutyric acid residue, a heptanoic acid residue, an octanoic acid residue, an acrylic acid residue, a methacrylic acid residue, an octylic acid residue (a 2-ethylhexanoic acid residue), a neodecanoic acid residue, a naphthenic acid residue, an isononanoic acid residue, a tung oil acid residue, a tall oil fatty acid residue, a coconut oil fatty acid residue, a soybean oil fatty acid residue, a linseed oil fatty acid residue, a safflower oil fatty acid residue, a dehydrated castor oil fatty acid residue, a tung oil fatty acid residue, a lauric acid residue, a myristic acid residue, a palmitic acid residue, a stearic acid residue, an isostearic acid residue, and an oleic acid residue.

The number of carbon atoms in the alkyl group having 1 to 21 carbon atoms of R¹ is preferably 1 or more, more preferably 6 or more, and preferably 18 or less, more preferably 18 or less, and still more preferably 17 or less.

R¹ is preferably a formic acid residue, an acetic acid residue, a propionic acid residue, a butanoic acid residue, a pentanoic acid residue, a hexanoic acid residue, a 2-ethylbutyric acid residue, a heptanoic acid residue, an octanoic acid residue, a 2-ethylhexanoic acid residue, an isononanoic acid residue, a neodecanoic acid residue, a naphthenic acid residue, a stearic acid residue, an oleic acid residue, a palmitic acid residue, a lauric acid residue, or a myristic acid residue.

### <<Metal Component>>

M¹ is lithium, sodium, potassium, rubidium, cesium, boron, magnesium, aluminum, calcium, manganese, iron, cobalt, nickel, antimony, copper, silver, zinc, molybdenum, vanadium, strontium, zirconium, barium, bismuth, lead, gold, platinum, or rare earth.

In the present description, the rare earth means one or more selected from scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu).

M¹ is preferably copper, zinc, bismuth, lead, cobalt, or rare earth, and more preferably copper, zinc, bismuth, or rare earth. In the case of rare earth, lanthanum, gadolinium, samarium, and neodymium are preferred.

When the metal component of the fatty acid metal salt is bismuth, neodymium, magnesium, lanthanum, gadolinium, samarium, or zinc, coloration resulting from addition of the aquatic organism adhesion-inhibiting antifouling agent is less likely to occur.
n1 is a numerical value determined by the ionic valence of the metal atom of M1. When M¹ is, for example, boron, n1 is 3. When M¹ is cobalt, n1 is 2.

As a main component of a conventional antifouling agent, cuprous oxide (Cu₂O), an organotin compound (TBT, TPT), an arsenic-based compound, a mercury-based compound, or the like has been mainly used. However, an organotin compound (TBT, TPT), an arsenic-based compound, and a mercury-based compound have a high probability of adversely affecting a work environment and an ecosystem due to toxicity or low degradability of the compounds. Therefore, the use of the compounds other than cuprous oxide (Cu₂O) is regulated at present. Furthermore, a revision bill in which Irgarol is added as a newly prohibited substance is under deliberation by International Maritime Organization (IMO) at present. However, tin, arsenic, and organotin are not substantially used as the metal component of the fatty acid metal salt, and therefore it is considered that the aquatic organism adhesion-inhibiting antifouling agent according to the present disclosure can reduce safety for operators (work environment) and marine environmental impacts as compared with the conventional antifouling agent.

The fatty acid metal salt that is the aquatic organism adhesion-inhibiting antifouling agent of the present disclosure also includes a form of a fatty acid metal salt of boric acid. The fatty acid metal salt of boric acid is, for example, a compound represented by the following general formula (2).

**(R²COO-M²-O)₃B** **(2)**

### [Chem. 2]

(In the general formula (2), R² is a hydrogen atom or an alkyl group having 1 to 21 carbon atoms, M² is boron, magnesium, aluminum, calcium, manganese, iron, cobalt, nickel, antimony, copper, zinc, molybdenum, vanadium, strontium, zirconium, barium, bismuth, lead, gold, platinum, or rare earth.)

In the general formula (2), the alkyl group having 1 to 21 carbon atoms of R² is the same as the alkyl group having 1 to 21 carbon atoms of R¹ in the general formula (1). Similarly, in the general formula (2), the metal of M² is the same as the metal of M¹ in the general formula (1).

In the aquatic organism adhesion-inhibiting antifouling agent of the present disclosure, R¹ in the general formula (1) or R² in the general formula (2) is more preferably a 2-ethylhexanoic acid residue, a neodecanoic acid residue, an isononanoic acid residue, a naphthenic acid residue, a stearic acid residue, an isostearic acid residue, palmitic acid, lauric acid, or myristic acid, and particularly preferably a 2-ethylhexanoic acid residue, a neodecanoic acid residue, or a stearic acid residue.

The aquatic organism adhesion-inhibiting antifouling agent of the present disclosure contains the above-mentioned fatty acid metal salt. The fatty acid metal salt contained in the aquatic organism adhesion-inhibiting antifouling agent may be one fatty acid metal salt alone or two or more fatty acid metal salts having different structures, and the aquatic organism adhesion-inhibiting antifouling agent may contain another optional component.

The aquatic organism adhesion-inhibiting antifouling agent of the present disclosure has only to contain the above-mentioned fatty acid metal salt. For example, the aquatic organism adhesion-inhibiting antifouling agent of the present disclosure substantially consists of the above-mentioned fatty acid metal salt, or the aquatic organism adhesion-inhibiting antifouling agent of the present disclosure may be the fatty acid metal salt.

Herein, "substantially consist of" means that the ratio of the fatty acid metal salt in the aquatic organism adhesion-inhibiting antifouling agent of the present disclosure is 90 mass% or more, 95 mass% or more, or 99 mass% or more.

The fatty acid metal salt can be produced by a wet synthesis method in which an oxide or hydroxide of metal is added to fatty acid or any publicly known method, and a commercially available product may be used.

### (Aquatic Organism Adhesion-inhibiting Antifouling Agent Composition)

An aquatic organism adhesion-inhibiting antifouling agent composition according to the present embodiment contains the aquatic organism adhesion-inhibiting antifouling agent of the present disclosure and a solvent. Further, the aquatic organism adhesion-inhibiting antifouling agent composition preferably contains a binder resin in addition to the aquatic organism adhesion-inhibiting antifouling agent of the present disclosure and the solvent.

The content of the aquatic organism adhesion-inhibiting antifouling agent of the present disclosure in the aquatic organism adhesion-inhibiting antifouling agent composition of the present disclosure is not particularly limited, and may be, for example, 1 mass% or more, and is preferably 5% or more, more preferably 10% or more, and still preferably 30% or more, with respect to the whole mass of the aquatic organism adhesion-inhibiting antifouling agent composition. The content of the aquatic organism adhesion-inhibiting antifouling agent of the present invention in the aquatic organism adhesion-inhibiting antifouling agent composition of the present invention may be, for example, 95 mass% or less, and is preferably 90% or less, more preferably 80% or less, and still preferably 70% or less, with respect to the whole mass of the aquatic organism adhesion-inhibiting antifouling agent composition.

The aquatic organism adhesion-inhibiting antifouling agent of the present disclosure contained in the aquatic organism adhesion-inhibiting antifouling agent composition of the present embodiment may be one aquatic organism adhesion-inhibiting antifouling agent alone or two or more aquatic organism adhesion-inhibiting antifouling agents.

The solvent contained in the aquatic organism adhesion-inhibiting antifouling agent composition of the present embodiment is a solvent to be added to adjust the viscosity of the aquatic organism adhesion-inhibiting antifouling agent composition, and may be either an aqueous medium or an oily medium.

Specific examples of the solvent include water, monofunctional alcohols, such as 1-butanol, isobutanol, 1-pentanol, 2-methyl-2-pentanol, 3-methyl-3-pentanol, methyl ethyl ketone, methanol, ethanol, n-propyl alcohol, and isopropyl alcohol, polyhydric alcohols, such as various diols and glycerin, diols, such as ethylene glycol, 1,2-propanediol, 1,3-propanediol, 1,4-butanediol, 1,6-hexanediol, 1,8-octanediol, 1,9-nonanediol, 1,10-decanediol, 1,12-dodecanediol, propylene glycol, 1,2-butanediol, 3-methyl-1,3-butanediol, 1,2-pentanediol, 2-methyl-1,3-propanediol, 1,2-hexanediol, dipropylene glycol, and diethylene glycol, alicyclic diols, such as bisphenol A, an aromatic diol that is an alkylene oxide (average additional amount by mole: 1 or more and 16 or less) addition product having 2 or 3 carbon atoms of bisphenol A, and hydrogenated bisphenol A, polyoxypropylene-2,2-bis(4-hydroxyphenyl)propane, polyoxyethylene-2,2-bis(4-hydroxyphenyl)propane, cyclohexanediol, ethylene glycol monomethyl ether, ethylene glycol monoisopropyl ether, ethylene glycol monobutyl ether, ethylene glycol monoisobutyl ether, diethylene glycol monomethyl ether, diethylene glycol monoisopropyl ether, diethylene glycol monobutyl ether, diethylene glycol monoisobutyl ether, propylene glycol monomethyl ether, propylene glycol monopropyl ether, dipropylene glycol monomethyl ether, tripropylene glycol monomethyl ether, diethylene glycol dimethyl ether, diethylene glycol methyl ethyl ether, diethylene glycol diethyl ether, triethylene glycol dimethyl ether, ethyl carbitol, γ-butyrolactone, and various fatty acids.

The solvent contained in the aquatic organism adhesion-inhibiting antifouling agent composition of the present embodiment may be one solvent alone or two or more solvents.

The content of the solvent in the aquatic organism adhesion-inhibiting antifouling agent composition of the present embodiment is not particularly limited, and may be appropriately set so that the solid content concentration of the aquatic organism adhesion-inhibiting antifouling agent composition is, for example, within the range of 30 mass% or more and 80 mass% or less.

When the aquatic organism adhesion-inhibiting antifouling agent composition of the present embodiment contains a binder resin, the content of the aquatic organism adhesion-inhibiting antifouling agent of the present disclosure is not particularly limited. For example, a metal derived from the aquatic organism adhesion-inhibiting antifouling agent may be contained in an amount of 0.01 part by mass or more and 30 parts by mass or less with respect to a resin solid content of 100 parts by mass, preferably in an amount of 0.1 part by mass or more with respect to a resin solid content of 100 parts by mass, and preferably in an amount of 15 parts by mass or less with respect to a resin solid content of 100 parts by mass.

Herein, the "resin solid content" means the total amount of solid content of the binder resin and the like contained in the aquatic organism adhesion-inhibiting antifouling agent composition.

The binder resin contained in the aquatic organism adhesion-inhibiting antifouling agent composition of the present disclosure is not particularly limited, and, for example, any of an emulsion-type resin, a latex-type resin, a thermosetting resin, and an active energy ray-curable resin can be used.

The binder resin may be either a water-soluble resin or a water-insoluble resin (a solvent-based resin).

In the present description, the "water-soluble resin" means that the amount of water required to dissolve 1 g of resin at 20°C is less than 10 mL. The "water-insoluble resin" refers to a resin other than the "water-soluble resin".

Specific examples of the binder resin include an acrylic resin, a vinyl acetate resin, a styrene resin, a vinyl chloride resin, an olefinic resin, a urethane resin, a urea resin, a urethane-urea resin, an acrylic urethane resin, an epoxy resin, a melamine resin, a phenolic resin, a polyester resin, an alkyd resin, a silicone resin, a polyphenylene sulfide resin, an acrylonitrile-styrene copolymer resin, an acrylonitrile-butadiene copolymer resin, and an acrylonitrile-butadiene-styrene copolymer (ABS) resin.

The binder resin includes those in which the above-mentioned resins are modified. For example, this means that a phenolic resin includes a rosin-modified phenolic resin.

The binder resin contained in the aquatic organism adhesion-inhibiting antifouling agent composition of the present embodiment may be one binder resin alone or two or more binder resins.

The content of the binder resin in the aquatic organism adhesion-inhibiting antifouling agent composition of the present embodiment is not particularly limited, and may be appropriately set within the range of 10 to 100 mass% with respect to the total mass of resin solid content of the aquatic organism adhesion-inhibiting antifouling agent composition.

The aquatic organism adhesion-inhibiting antifouling agent composition of the present embodiment has only to contain the aquatic organism adhesion-inhibiting antifouling agent of the present disclosure and the solvent, and may contain the binder resin and another additive within a range that does not impair the effects of the present invention without departing from the spirit of the present invention disclosed in the present description. Examples of the other additive include a pigment, a flatting agent, a curing agent, a curing accelerator, a plasticizer, an antifoaming agent, a dispersant, a leveling agent, a thickener, an antioxidant, a weathering agent, a flame retardant, an antistat, a lubricant, and a preservative.

### (Aquatic Organism Adhesion-inhibiting Cured Antifouling Agent)

An aquatic organism adhesion-inhibiting cured antifouling agent can be formed by applying the aquatic organism adhesion-inhibiting antifouling agent composition of the present embodiment to the surface of a substrate and subjecting the obtained coating film to a curing method suitable for the aquatic organism adhesion-inhibiting antifouling agent composition (thermal curing, curing through an active energy ray, etc.).

### (Antifouling Coating Film)

As a coating method with an aquatic organism adhesion-inhibiting antifouling agent composition, any method that is a publicly known and used coating method can be used. Examples of the method include conventionally known methods, such as a roll coater, electrostatic coating, a bar coater, a gravure coater, a knife coater, dipping coating, spray coating such as airless spray coating or air spray coating, shower, brush coating, and roller coating.

### (Substrate Equipped with Antifouling Coating Film)

With regard to a substrate equipped with an antifouling coating film, a substrate to be coated is not particularly limited. For example, examples of a substrate that is a ship or the like include FRP, steel, wood, and an aluminum alloy. In particular, a steel ship or an aluminum ship may have a surface coated with a primer, an anticorrosive coating material, and if necessary, a binder coating material. In addition, examples of a general substrate include paper, synthetic paper, a steel plate, an aluminum foil, glass, wood, a woven fabric, a knit fabric, a nonwoven fabric, a plasterboard, a woodworking board, and a resin substrate.

Specific examples of the resin substrate include a polyethylene terephthalate (PET) film, a polystyrene film, a polyamide film, a polyacrylonitrile film, a polyethylene film (LLDPE: low-density polyethylene film and HDPE: high-density polyethylene film), a polypropylene film (CPP: cast polypropylene film and OPP: biaxially oriented polypropylene film), a polyvinyl alcohol film, an ethylene-vinyl alcohol copolymer film, a polycarbonate film, a polyethylene terephthalate film, a polymethyl methacrylate film, a polystyrene film, a polyester film, a polyolefin film, an epoxy resin film, a melamine resin film, a triacetyl cellulose resin film, a polyvinyl alcohol film, an ABS resin film, a norbornene-based resin film, a cyclic olefinic resin film, a polyimide resin film, a polyvinyl fluoride resin film, a polyvinylidene fluoride film, and an ethylene-vinyl acetate copolymer film.

The used resin substrate may be subjected to surface treatment such as corona treatment.

The aquatic organism adhesion-inhibiting antifouling agent composition obtained using the aquatic organism adhesion-inhibiting antifouling agent of the present disclosure, the aquatic organism adhesion-inhibiting cured antifouling agent obtained using the aquatic organism adhesion-inhibiting antifouling agent of the present disclosure, the antifouling coating film obtained using the aquatic organism adhesion-inhibiting antifouling agent of the present disclosure, and the substrate equipped with the antifouling coating film can be suitably used for a substrate having an antifouling property of inhibiting adhesion of an aquatic organism, and can be utilized for a wide application including an underwater structure at least part of an exterior surface of which is arranged or disposed in water, such as part of a ship, a wave-dissipating concrete block or a breakwater, a bay shore road, a submarine tunnel, a harbor facility, a canal, a watercourse, a quay, or a bridge, a fishery material, such as a fishing net, a rope, a float, or a buoy, a seawater supply and drainage pipe in a factory, a thermal or atomic power station, or the like, a water intake facility, and a pipe such as an aqueduct for cooling, an industrial water facility, or a submarine base.

### Examples

Hereinafter, the present invention will be specifically described by Examples and Comparative Examples.

In addition, the present invention is not limited to the following examples.

### (Synthesis Example 1: Preparation of Magnesium 2-ethylhexanoate)

461.4 parts by mass of 2-ethylhexanoic acid, 71.9 parts by mass of magnesium hydroxide, and 411.4 parts by mass of petroleum-based hydrocarbon were allowed to react with each other at 110°C, and water was removed at 90°C under reduced pressure, and 35.9 parts by mass of butyl diglycol was added to obtain 1,000 parts by mass of a magnesium 2-ethylhexanoate solution (Mg 2-ethylhexanoate). The magnesium content in the obtained Mg 2-ethylhexanoate was 3.0 mass%.

### (Synthesis Example 2: Preparation of Cobalt 2-ethylhexanoate)

319.0 parts by mass of 2-ethylhexanoic acid and 100.0 parts by mass of cobalt hydroxide were allowed to react with each other at 130°C, and water was removed at 130°C under reduced pressure, and 134.2 parts by mass of petroleum-based hydrocarbon was added to obtain 502.3 parts by mass of a cobalt 2-ethylhexanoate solution (Co 2-ethylhexanoate). The cobalt content in the obtained Co 2-ethylhexanoate was 12 mass%.

### (Synthesis Example 3: Preparation of Cobalt Borate Neodecanoate)

181.88 parts by mass of neodecanoic acid, 90.83 parts by mass of propionic acid, 100.00 parts by mass of cobalt hydroxide, and 64.50 parts by mass of xylene were allowed to react with each other at 190°C, water and the solvent were removed at 190°C under reduced pressure, and butyl borate was added at 189°C. After a reaction at 220°C, butyl propionate produced as a by-product was removed at 220°C under reduced pressure to obtain 277.03 parts by mass of cobalt borate neodecanoate (Co-B neodecanoate). The cobalt content in the obtained Co-B neodecanoate was 22.2 mass%. The boron content was 1.2%.

### (Synthesis Example 4: Preparation of Copper Neodecanoate)

217.1 parts by mass of neodecanoic acid and 36.0 parts by mass of sodium hydroxide were allowed to react with each other at 80°C, 100.0 parts by mass of copper sulfate was further added, and a reaction was performed at 80°C. Sodium sulfate produced as a by-product was washed with water, water was removed at 130°C under reduced pressure, and 76.2 parts by mass of petroleum-based hydrocarbon was added to obtain 301.6 parts by mass of a copper neodecanoate solution (Cu neodecanoate). The copper content in the obtained Cu neodecanoate was 8 mass%.

### (Synthesis Example 5: Preparation of Bismuth 2-ethylhexanoate)

330.6 parts by mass of 2-ethylhexanoic acid and 125.0 parts by mass of bismuth oxide were allowed to react with each other at 130°C, and water was removed at 130°C under reduced pressure to obtain 439.5 parts by mass of a bismuth 2-ethylhexanoate solution (Bi 2-ethylhexanoate). The bismuth content in the obtained Bi 2-ethylhexanoate was 25 mass%.

### (Synthesis Example 6: Preparation of Lanthanum Neodecanoate)

83.1 parts by mass of neodecanoic acid and 21.5 parts by mass of lanthanum oxide were allowed to react with each other at 130°C, water was removed at 130°C under reduced pressure, and 107.6 parts by mass of cyclohexane was added to obtain 208.5 parts by mass of a lanthanum neodecanoate solution (La neodecanoate). The lanthanum content in the obtained La neodecanoate was 8.8 mass%.

### (Synthesis Example 7: Preparation of Neodymium Neodecanoate)

224.8 parts by mass of neodecanoic acid and 60.0 parts by mass of neodymium oxide were allowed to react with each other at 130°C, water was removed at 130°C under reduced pressure, and 306.9 parts by mass of cyclohexane was added to obtain 570.0 parts by mass of a neodymium neodecanoate solution (Nd neodecanoate). The neodymium content in the obtained Nd neodecanoate was 8.8 mass%.

### (Synthesis Example 8: Preparation of Lead 2-ethylhexanoate)

285.0 parts by mass of 2-ethylhexanoic acid, 220.0 parts by mass of petroleum-based hydrocarbon, and 220.0 parts by mass of lead oxide were allowed to react with each other at 115°C for 3 hours, and water was removed under reduced pressure for 20 minutes. 118.3 parts by mass of petroleum-based hydrocarbon was added to obtain 811.0 parts by mass of a lead 2-ethylhexanoate solution (Pb 2-ethylhexanoate). The lead content in the obtained Pb 2-ethylhexanoate was 24.0 mass%.

### (Examples 1 to 8)

0.4 g of the fatty acid metal salt (Mg) prepared in Synthesis Example 1 (addition amount to a binder resin: 10 wt%), 3.31 g of a synthetic resin (product name: V343-306SA manufactured by DIC Graphics Corporation, solid content concentration: 25%, weight ratio of solvents: methyl ethyl ketone/ethyl acetate/toluene = 35/20/20), 10.58 g of a polyurethane resin (product name: SANPRENE IB-D12 (manufactured by Sanyo Chemical Industries, Ltd., solid content concentration: 30%, weight ratio of solvents: methyl ethyl ketone/isopropanol =47/23)) as a binder resin, 7.1 g of methyl ethyl ketone (manufactured by Kanto Chemical Co., Inc.), 7.1 g of toluene (manufactured by Kanto Chemical Co., Inc.), and 80 g of steel beads of 1/8 inch were placed into a polyethylene bottle, and shaken with a paint conditioner for 30 minutes to prepare an aquatic organism adhesion-inhibiting antifouling agent composition according to Example 1.

Subsequently, the prepared aquatic organism adhesion-inhibiting antifouling agent composition was applied to a PET film substrate having a thickness of 188 µm with an applicator so as to have a wet film thickness of 64 µm, and the resultant substrate was dried at room temperature for 12 hours and then dried at 150°C for 15 minutes to produce the substrate having the applied aquatic organism adhesion-inhibiting antifouling agent composition as a test piece.

In Examples 2 to 8, aquatic organism adhesion-inhibiting antifouling agent compositions were produced by using the fatty acid metal salts produced in Synthesis Examples 2 to 8, respectively, instead of the fatty acid metal salt of Synthesis Example 1 in Example 1, and used as test pieces. In Examples 5 and 8, the drying time was 60 minutes at 80°C. In Examples 2 to 4, 6, and 7, the drying time was 15 minutes at 150°C, which was the same as in Example 1.

### (Comparative Examples 1 and 2)

In Examples 1 to 8, the respective fatty acid metal salts were used. In Comparative Example 1, a blank test piece consisting only of a binder resin containing no fatty acid metal salts was produced, and in Comparative Example 2, a glass piece alone was used as a test piece.

### [Evaluation of Antifouling Property in Closed System of Aquatic Organism Adhesion-inhibiting Antifouling Agent]

The antifouling property in a closed system of an aquatic organism adhesion-inhibiting antifouling agent was evaluated using the test pieces obtained in Examples 1 to 8 and Comparative Examples 1 and 2 described above. The results are shown in Table 1. The evaluation of the antifouling property was performed by observing the state of barnacles. Hereinafter, the outline of the evaluation will be described.

### <Method for Evaluating Antifouling Property in Closed System>

A method for evaluating the antifouling property in the closed system was performed in accordance with the following procedures (1) to (4).
(1) Each of the test pieces in which the aquatic organism adhesion-inhibiting antifouling agent composition produced in each of Examples was applied and a certain number of (in this test, approximately 100) cypris larvae were arranged in a test container, and the number of the cypris larvae was counted.
   The "cypris larvae" used herein refers to larvae of barnacles at an adhesion stage.
(2) The states of barnacles on the test piece and in locations (in the test container) other than the test piece after a constant time (in this test, one day) were observed, and the number of barnacles in each of the states was counted.
(3) The counting of (2) was repeated until the end of the test (in this test, 12 days after the initiation of the test).
(4) From the number of the barnacles counted at the end of the test, the adhesion ratio to the test piece was determined.

### <Test Container and each Condition>

The test piece obtained in each of Examples 1 to 8 and Comparative Examples 1 and 2 was allowed to stand on the bottom surface of a test container, and seawater and the larvae at the adhesion stage were added. A test was performed using the following test container under the following conditions.

### -Test Container-

Material: polypropylene
Dimension: 111 mm in length, 81 mm in width, 46 mm in depth

### -Seawater-

Natural seawater collected from the coast of Himeji City was filtered through a mixed cellulose membrane filter having a pore size of 0.45 µm (manufactured by Toyo Roshi Kaisha, Ltd.) and used. The salt concentration was 3.11%, the pH was 8.14, and the water temperature was 20°C.

### -Light Irradiation Condition-

Light irradiation: 12 hours (a day)
Dark room: 12 hours (a day)

### <State of Barnacles>

The states of barnacles observed in the antifouling property evaluation test will be described below.

### -Free-swimming-

Free-swimming is a state where cypris larvae of barnacles are alive in a swimming state without adhesion to either an experiment container or a sample surface.

### -Exploration and Primary Adhesion (Sample Surface)-

Exploration and primary adhesion are a state where cypris larvae walk on a sample surface using the first antenna or a state where cypris larvae repeat adhesion to the sample surface and walking using the first antenna.

### -Metamorphosing (Sample Surface)-

Metamorphosing is a state where cypris larvae adhere to the sample surface and are transitioning into juvenile barnacles (juveniles of barnacles).

### -Juvenile Barnacles (Sample Surface)-

Juvenile barnacles adhere to the test container or the test piece in a state where cypris larvae metamorphose and molt their carapace.

### -Adhesion to Test Container-

Adhesion to the test container means adhesion to the test container in any state of exploration and primary adhesion, metamorphosing, or juvenile barnacles.

### -Juvenile Barnacles Adhering to Back Surface/Juvenile Barnacles not Adhering-

Juvenile barnacles adhering to a back surface/juvenile barnacle not adhering is a state where juvenile barnacles are present at the test piece on a surface where the aquatic organism adhesion-inhibiting antifouling agent composition is not applied.

### -Rotation and Thoracic Limb Movement-

Rotation and thoracic limb movement are a state where barnacles move the thoracic limbs during rotation.

### -Thoracic Limb Protrusion and Nonresponsiveness-

Thoracic limb protrusion and nonresponsiveness are a state where barnacles are nonresponsive and are considered to be death or a state where disorganization starts.

The number of barnacles in each state counted at each elapsed time after 1 day, 2 days, 3 days, 5 days, 7 days, 9 days, and 12 days was evaluated. From the numbers of barnacles during metamorphosis and juvenile barnacles adhering to the sample surface among barnacles adhering to the test piece after 12 days, the final adhesion ratio of barnacles was calculated, and an antifouling property was evaluated on the basis of this final adhesion ratio. The states of barnacles at each elapsed time and the number of the barnacles are listed in Table 1.

**[Table 1]**

| | Fatty acid metal salt | Evaluation item | | Evaluation Result | | | | | | | | | | | | | | Fin al adh esi on rat io |
|---|---|---|---|---|---|---|---|---|---|---|---|---|---|---|---|---|---|---|
| | | Larva | | After 1 day | | After 2 days | | After 3 days | | After 5 days | | After 7 days | | After 9 days | | After 12 days | | |
| | | Nu mb er | Respons e or state | Nu mb er | % | Nu mb er | % | Nu mb er | % | Nu mb er | % | Nu mb er | % | Nu mb er | % | Nu mb er | % | % |
| Ex . 1 | Mg 2-ethylh exanoa te | 10 1 | Free-swimmin g | 99 | 9 8 | 10 1 | 1 0 0 | 98 | 9 7 | 97 | 9 6 | 91 | 9 0 | 76 | 7 5 | 52 | 5 2 | 33 |
| | | | Explora tion and primary adhesio n | 2 | 2 | 0 | | 2 | 2 | 1 | 1 | 3 | 3 | 1 | 1 | 0 | | |
| | | | Metamor phosing | 0 | | 0 | | 0 | | 0 | | 2 | 2 | 1 | 1 | 0 | | |
| | | | Juvenil e barnacl e | 0 | | 0 | | 0 | | 2 | 2 | 3 | 3 | 17 | 1 7 | 33 | 3 3 | |
| | | | Adhesio n to test contain er | 0 | | 0 | | 0 | | 0 | | 1 | 1 | 5 | 5 | 14 | 1 4 | |
| | | | Thoraci c limb protrus ion and nonresp onsiven ess | 0 | | 0 | | 1 | 1 | 1 | 1 | 1 | 1 | 1 | 1 | 2 | 2 | |
| Ex 2 | Co 2-ethylh exanoa te | 11 0 | Free-swimmin g | 10 7 | 9 7 | 10 2 | 9 4 | 10 4 | 9 5 | 10 5 | 9 6 | 95 | 8 6 | 72 | 6 6 | 48 | 4 4 | 52 |
| | | | Explora tion and primary adhesio n | 1 | 1 | 4 | 4 | 2 | 2 | 1 | 1 | 3 | 3 | 2 | 2 | 0 | | |
| | | | Metamor phosing | 0 | | 0 | | 0 | | 0 | | 3 | 3 | 1 | 1 | 0 | | |
| | | | Juvenil e barnacl e | 0 | | 1 | 1 | 1 | 1 | 1 | 1 | 5 | 5 | 31 | 2 8 | 57 | 5 2 | |
| | | | Adhesio n to test contain er | 0 | | 0 | | 0 | | 0 | | 0 | | 0 | | 0 | | |
| | | | Thoraci c limb protrus ion and nonresp onsiven ess | 2 | 2 | 2 | 2 | 3 | 3 | 3 | 3 | 4 | 4 | 4 | 4 | 5 | 5 | |
| Ex . 3 | Co-B neodec anoate | 10 1 | Free-swimmin g | 99 | 9 8 | 10 0 | 9 9 | 95 | 9 4 | 94 | 9 3 | 98 | 9 7 | 86 | 8 5 | 89 | 8 8 | 10 |
| | | | Explora tion and primary adhesio n | 2 | 2 | 1 | 1 | 6 | 6 | 6 | 6 | 2 | 2 | 8 | 8 | 0 | | |
| | | | Metamor phosing | 0 | | 0 | | 0 | | 0 | | 0 | | 0 | | 0 | | |
| | | | Juvenil e barnacl e | 0 | | 0 | | 0 | | 0 | | 0 | | 5 | 5 | 10 | 1 0 | |
| | | | Adhesio n to test contain er | 0 | | 0 | | 0 | | 0 | | 0 | | 0 | | 0 | | |
| | | | Thoraci c limb protrus ion and nonresp onsiven ess | 0 | | 0 | | 0 | | 1 | 1 | 1 | 1 | 2 | 2 | 2 | 2 | |
| Ex . 4 | Cu neodec anoate | 10 6 | Free-swimmin g | 10 5 | 9 9 | 10 5 | 9 9 | 10 3 | 9 7 | 10 5 | 9 9 | 3 | 3 | 3 | 3 | 3 | 2 | 0 |
| | | | Explora tion and primary adhesio n | 0 | | 0 | | 2 | 2 | 0 | | 0 | | 0 | | 0 | | |
| | | | Metamor phosing | 0 | | 0 | | 0 | | 0 | | 0 | | 0 | | 0 | | |
| | | | Juvenil e barnacl e | 0 | | 0 | | 0 | | 0 | | 0 | | 0 | | 0 | | |
| | | | Adhesio n to test contain er | 0 | | 0 | | 0 | | 0 | | 0 | | 0 | | 0 | | |
| | | | Rotatio n and thoraci c limb movemen t | | | | | | | | | 99 | 9 3 | 95 | 9 0 | 95 | 8 8 | |
| | | | Thoraci c limb protrus ion and nonresp onsiven ess | 1 | 1 | 1 | 1 | 1 | 1 | 1 | 1 | 4 | 4 | 8 | 8 | 8 | 1 0 | |
| Ex . 5 | Bi 2-ethylh exanoa te | 10 5 | Free-swimmin g | 10 1 | 9 8 | 10 0 | 9 7 | 10 2 | 9 9 | 10 1 | 9 8 | 10 2 | 9 7 | 10 0 | 9 5 | 67 | 6 4 | 12 |
| | | | Explora tion and primary adhesio n | 1 | 1 | 2 | 3 | 0 | | 1 | 1 | 2 | 2 | 4 | 4 | 0 | | |
| | | | Metamor phosing | 0 | | 0 | | 0 | | 0 | | 0 | | 0 | | 3 | 3 | |
| | | | Juvenil e barnacl e | 0 | | 0 | | 0 | | 0 | | 0 | | 0 | | 10 | 1 0 | |
| | | | Adhesio n to test contain er | 0 | | 0 | | 0 | | 0 | | 0 | | 0 | | 24 | 2 3 | |
| | | | Thoraci c limb protrus ion and nonresp onsiven ess | 1 | 1 | 1 | | 1 | 1 | 1 | 1 | 1 | 1 | 1 | 1 | 1 | 1 | |
| Ex . 6 | La neodec anoate | 10 3 | Free-swimmin g | 10 1 | 9 8 | 10 0 | 9 7 | 10 2 | 9 9 | 10 1 | 9 8 | 10 1 | 9 8 | 10 0 | 9 7 | 98 | 9 5 | 0 |
| | | | Explora tion and primary adhesio n | 1 | 1 | 2 | 2 | 0 | | 1 | 1 | 1 | 1 | 1 | 1 | 0 | | |
| | | | Metamor phosing | 0 | | 0 | | 0 | | 0 | | 0 | | 0 | | 0 | | |
| | | | Juvenil e barnacl e | 0 | | 0 | | 0 | | 0 | | 0 | | 0 | | 0 | | |
| | | | Adhesio n to test contain er | 0 | | 0 | | 0 | | 0 | | 0 | | 0 | | 2 | 2 | |
| | | | Adhesio n to back surface /not adhered juvenil e barnacl e | 0 | | 0 | | 0 | | 0 | | 0 | | 1 | 1 | 2 | 2 | |
| | | | Thoraci c limb protrus ion and nonresp onsiven ess | 1 | 1 | 1 | 1 | 1 | 1 | 1 | 1 | 1 | 1 | 1 | 1 | 1 | 1 | |
| Ex . 7 | Nd neodec anoate | 11 0 | Free-swimmin g | 10 8 | 9 8 | 10 7 | 9 7 | 92 | 8 4 | 93 | 8 5 | 65 | 5 9 | 47 | 4 3 | 40 | 3 6 | 60 |
| | | | Explora tion and primary adhesio n | 1 | 1 | 1 | 1 | 2 | 2 | 1 | 1 | 1 | 1 | 1 | 1 | 0 | | |
| | | | Metamor phosing | 1 | 1 | 0 | | 11 | 1 0 | 0 | | 0 | | 0 | | 0 | | |
| | | | Juvenil e barnacl e | 0 | | 1 | 1 | 3 | 3 | 14 | 1 3 | 40 | 3 6 | 58 | 5 3 | 66 | 6 0 | |
| | | | Adhesio n to test contain er | 0 | | 0 | | 0 | | 0 | | 2 | 2 | 2 | 2 | 2 | 2 | |
| | | | Thoraci c limb protrus ion and nonresp onsiven ess | 0 | | 1 | 1 | 2 | 2 | 2 | 2 | 2 | 2 | 2 | 2 | 2 | 2 | |
| Ex . 8 | Pb 2-ethylh exanoa te | 12 0 | Free-swimmin g | 11 6 | 9 7 | 11 7 | 9 8 | 11 7 | 9 8 | 11 5 | 9 6 | 11 2 | 9 3 | 11 3 | 9 4 | 10 5 | 8 9 | 6 |
| | | | Explora tion and primary adhesio n | 2 | 2 | 1 | 1 | 1 | 1 | 2 | 2 | 4 | 3 | 1 | 1 | 1 | 1 | |
| | | | Metamor phosing | 0 | | 0 | | 0 | | 0 | | 0 | | 0 | | 0 | | |
| | | | Juvenil e barnacl e | 0 | | 0 | | 0 | | 0 | | 0 | | 0 | | 7 | 6 | |
| | | | Adhesio n to test contain er | 0 | | 0 | | 0 | | 0 | | 0 | | 0 | | 0 | | |
| | | | Thoraci c limb protrus ion and nonresp onsiven ess | 2 | 2 | 2 | 2 | 2 | 2 | 3 | 3 | 4 | 3 | 6 | 5 | 6 | 5 | |
| Co mp . Ex . 1 | - (Only binder ) | 10 7 | Free-swimmin g | 10 4 | 9 7 | 10 3 | 9 6 | 92 | 8 6 | 90 | 8 4 | 57 | 5 3 | 38 | 3 6 | 31 | 2 9 | 67 |
| | | | Explora tion and primary adhesio n | 0 | | 1 | 1 | 3 | 3 | 0 | | 2 | 2 | 2 | 2 | 1 | 1 | |
| | | | Metamor phosing | 2 | 2 | 0 | | 5 | 5 | 0 | | 0 | | 0 | | 3 | 3 | |
| | | | Juvenil e barnacl e | 0 | | 2 | 2 | 5 | 5 | 15 | 1 4 | 45 | 4 2 | 63 | 5 9 | 68 | 6 4 | |
| | | | Adhesio n to test contain er | 0 | | 0 | | 0 | | 0 | | 0 | | 1 | 1 | 1 | 1 | |
| | | | Thoraci c limb protrus ion and nonresp onsiven ess | 1 | 1 | 1 | 1 | 2 | 2 | 2 | 2 | 3 | 3 | 3 | 3 | 3 | 3 | |
| Co mp Ex 2 | - (Only glass plate) | 11 8 | Free-swimmin g | 11 4 | 9 7 | 11 0 | 9 3 | 10 3 | 8 7 | 70 | 5 9 | 45 | 3 8 | 31 | 2 6 | 23 | 2 0 | 62 |
| | | | Explora tion and primary adhesio n | 1 | 1 | 4 | 3 | 0 | | 1 | 1 | 0 | | 1 | 1 | 0 | | |
| | | | Metamor phosing | 0 | | 0 | | 2 | 2 | 8 | 7 | 0 | | 0 | | 0 | | |
| | | | Juvenil e barnacl e | 0 | | 1 | 1 | 8 | 7 | 33 | 2 8 | 60 | 5 1 | 69 | 5 9 | 73 | 6 2 | |
| | | | Adhesio n to test contain er | 0 | | 0 | | 0 | | 0 | | 7 | 6 | 11 | 9 | 16 | 1 4 | |
| | | | Thoraci c limb protrus ion and nonresp onsiven ess | 3 | 3 | 3 | 3 | 5 | 4 | 6 | 5 | 6 | 5 | 6 | 5 | 6 | 5 | |

As seen from Table 1, since the aquatic organism adhesion-inhibiting antifouling agent of the present invention is added, the final adhesion ratios of barnacles in Examples 1 to 8 are lower than those in Comparative Examples 1 and 2 in which the aquatic organism adhesion-inhibiting antifouling agent is not contained (in Comparative Example 1, only a binder resin on a substrate), and an antifouling property is obtained. It was seen that the final adhesion ratios in Example 4 in which the metal component of the fatty acid metal salt is copper and Example 6 in which the metal component of the fatty acid metal salt is lanthanum are 0%, and the antifouling properties thereof are particularly excellent. In addition, the final adhesion ratios in Example 3 in which the metal component of the fatty acid metal salt is cobalt borate, Example 5 in which the metal component of the fatty acid metal salt is bismuth, and Example 8 in which the metal component of the fatty acid metal salt is lead are 12% or less, and the antifouling properties thereof are evaluated to be excellent. When the metal component of the fatty acid metal salt is lanthanum, the adhesion ratio is low, while the swimming ratio of cypris larvae is high, and the high aqueous organism-repellent property and low toxicity of the fatty acid metal salt can be confirmed.

### [Evaluation of Antifouling Property in Open System of Aquatic Organism Adhesion-inhibiting Antifouling Agent]

The preparation of a fatty acid metal salt and the production of a sample used in evaluation of an antifouling property in an open system were performed by the following methods.

### (Synthesis Example 9: Preparation of Lanthanum Stearate)

96.07 parts by mass of hydrochloric acid (concentration: 35%) and 50.00 parts by mass of lanthanum oxide were added to 100 parts by mass of distilled water, and stirred to obtain 246.07 parts by mass of a lanthanum chloride aqueous solution. The lanthanum content in the obtained lanthanum chloride aqueous solution was 17.3%.

Next, 862.30 parts by mass of distilled water, 102.53 parts by mass of stearic acid, and 72.46 parts by mass of sodium hydroxide (concentration: 20%) were allowed to react with each other at 90°C, 96.99 parts by mass of the lanthanum chloride aqueous solution prepared in the foregoing was further added, and the mixture was allowed to react at 90°C and washed with water, and water was removed at 150°C under reduced pressure to obtain 119.94 parts by mass of a lanthanum stearate solution (La stearate). The lanthanum content in the obtained La stearate was 14.1 mass%.

### (Synthesis Example 10: Preparation of Bismuth Stearate)

158.48 parts by mass of stearic acid and 37.36 parts by mass of bismuth oxide were allowed to react with each other at 165°C, and water was removed under reduced pressure to obtain 191.36 parts by mass of a bismuth stearate solution (Bi stearate). The bismuth content in the obtained Bi stearate was 17.5 mass%.

### (Synthesis Example 11: Preparation of Neodymium Stearate)

92.54 parts by mass of hydrochloric acid (concentration: 35%) and 50.00 parts by mass of neodymium oxide were added to 100 parts by mass of distilled water, and stirred to obtain 242.54 parts by mass of a neodymium chloride aqueous solution. The neodymium content in the obtained neodymium chloride aqueous solution was 17.6 mass%.

Next, 862.30 parts by mass of distilled water, 100.00 parts by mass of stearic acid, and 72.46 parts by mass of sodium hydroxide (concentration: 20%) were allowed to react with each other at 90°C, 98.97 parts by mass of the neodymium chloride aqueous solution prepared in the foregoing was further added, and the mixture was allowed to react at 90°C and washed with water, and water was removed at 150°C under reduced pressure to obtain 117.06 parts by mass of a neodymium stearate solution (Nd stearate). The neodymium content in the obtained Nd stearate was 14.9 mass%.

### (Synthesis Example 12: Preparation of Samarium Neodecanoate)

37.62 parts by mass of samarium oxide and 137.07 of neodecanoic acid were allowed to react with each other at 130°C, water was removed at 130°C under reduced pressure, and 183.61 parts by mass of cyclohexane was added to obtain 364.66 parts by mass of a samarium neodecanoate solution (Sm neodecanoate). The samarium content in the obtained Sm neodecanoate was 8.8 mass%.

### (Synthesis Example 13: Preparation of Gadolinium Neodecanoate)

43.02 parts by mass of gadolinium oxide and 149.30 of neodecanoic acid were allowed to react with each other at 130°C, water was removed at 130°C under reduced pressure, and 210.0 parts by mass of cyclohexane was added to obtain 415.05 parts by mass of a gadolinium neodecanoate solution (Gd neodecanoate). The gadolinium content in the obtained Gd neodecanoate was 8.8 mass%.

### (Synthesis Example 14: Preparation of Zinc 2-ethylhexanoate)

330.6 parts by mass of 2-ethylhexanoic acid and 119.3 parts by mass of zinc oxide were allowed to react with each other at 120°C, and water was removed at 120°C under reduced pressure to obtain 429.69 parts by mass of a zinc 2-ethylhexanoate solution (Zn 2-ethylhexanoate). The zinc content in the obtained Zn 2-ethylhexanoate was 22.3 mass%.

### (Examples 9 to 14: Production of Test Piece)

3.31 g of a synthetic resin (product name: V343-306SA manufactured by DIC Graphics Corporation, solid content concentration: 25%, weight ratio of solvents: methyl ethyl ketone/ethyl acetate/toluene = 35/20/20), 10.58 g of a polyurethane resin (product name: SANPRENE IB-D12 (manufactured by Sanyo Chemical Industries, Ltd., solid content concentration: 30%, weight ratio of solvents: methyl ethyl ketone/isopropanol =47/23)) as a binder resin, and a fatty acid metal salt listed in Table 2 in such an amount that the addition amount to the binder resin was 30 wt% were added to prepare an aquatic organism adhesion-inhibiting antifouling agent composition.

The prepared aquatic organism adhesion-inhibiting antifouling agent composition was applied to a PET film substrate having a thickness of 188 µm with an applicator so as to have a wet film thickness of 254 µm, and the obtained substrate was dried at room temperature for 1 week, and cut into 5 cm in length and 5 cm in width to produce the substrate having the applied aquatic organism adhesion-inhibiting antifouling agent composition as a test piece.

### (Examples 15 to 17: Production of Test Piece)

3.31 g of a synthetic resin (product name: V343-306SA manufactured by DIC Graphics Corporation, solid content concentration: 25%, weight ratio of solvents: methyl ethyl ketone/ethyl acetate/toluene = 35/20/20), 10.58 g of a polyurethane resin (product name: SANPRENE IB-D12 (manufactured by Sanyo Chemical Industries, Ltd., solid content concentration: 30%, weight ratio of solvents: methyl ethyl ketone/isopropanol =47/23)) as a binder resin, a fatty acid metal salt listed in Table 2 in such an amount that the addition amount to the binder resin was 30 wt%, 0.5 g of methyl ethyl ketone (manufactured by Kanto Chemical Co., Inc.), 0.5 g of toluene (manufactured by Kanto Chemical Co., Inc.), and 80 g of steel beads of 1/8 inch were placed into a polyethylene bottle, and shaken with a paint conditioner for 30 minutes to obtain an aquatic organism adhesion-inhibiting antifouling agent composition.

The prepared aquatic organism adhesion-inhibiting antifouling agent composition was applied to a PET film substrate having a thickness of 188 µm with an applicator so as to have a wet film thickness of 254 µm, and the obtained substrate was dried at room temperature for 1 week, and cut into 5 cm in length and 5 cm in width to produce the substrate having the applied aquatic organism adhesion-inhibiting antifouling agent composition as a test piece.

### (Examples 18 to 20: Production of Test Piece)

3.31 g of a synthetic resin (product name: V343-306SA manufactured by DIC Graphics Corporation, solid content concentration: 25%, weight ratio of solvents: methyl ethyl ketone/ethyl acetate/toluene = 35/20/20), 10.58 g of a polyurethane resin (product name: SANPRENE IB-D12 (manufactured by Sanyo Chemical Industries, Ltd., solid content concentration: 30%, weight ratio of solvents: methyl ethyl ketone/isopropanol =47/23)) as a binder resin, a fatty acid metal salt listed in Table 2 in such an amount that the addition amount to the binder resin was 50 wt%, 1.5 g of methyl ethyl ketone (manufactured by Kanto Chemical Co., Inc.), 1.5 g of toluene (manufactured by Kanto Chemical Co., Inc.), and 80 g of steel beads of 1/8 inch were placed into a polyethylene bottle, and shaken with a paint conditioner for 30 minutes to obtain an aquatic organism adhesion-inhibiting antifouling agent composition. The prepared aquatic organism adhesion-inhibiting antifouling agent composition was applied to a PET film substrate having a thickness of 188 µm with an applicator so as to have a wet film thickness of 254 µm, and the obtained substrate was dried at room temperature for 1 week, and cut into 5 cm in length and 5 cm in width to produce the substrate having the applied aquatic organism adhesion-inhibiting antifouling agent composition as a test piece.

### (Comparative Example 3: Production of Test Piece)

3.31 g of a synthetic resin (product name: V343-306SA manufactured by DIC Graphics Corporation, solid content concentration: 25%, weight ratio of solvents: methyl ethyl ketone/ethyl acetate/toluene = 35/20/20), 10.58 g of a polyurethane resin (product name: SANPRENE IB-D12 (manufactured by Sanyo Chemical Industries, Ltd., solid content concentration: 30%, weight ratio of solvents: methyl ethyl ketone/isopropanol =47/23)) as a binder resin, 1.20 g (the addition amount to the binder resin: 30 wt%) of cuprous oxide, 0.5 g of methyl ethyl ketone (manufactured by Kanto Chemical Co., Inc.), 0.5 g of toluene (manufactured by Kanto Chemical Co., Inc.), and 80 g of steel beads of 1/8 inch were placed into a polyethylene bottle, and shaken with a paint conditioner for 30 minutes to obtain an aquatic organism adhesion-inhibiting antifouling agent composition.

The prepared aquatic organism adhesion-inhibiting antifouling agent composition was applied to a PET film substrate having a thickness of 188 µm with an applicator so as to have a wet film thickness of 254 µm, and the obtained substrate was dried at room temperature for 1 week, and cut into 5 cm in length and 5 cm in width to produce the substrate having the applied aquatic organism adhesion-inhibiting antifouling agent composition as a test piece.

### (Comparative Example 4: Production of Test Piece)

A test piece was prepared in the same manner as in Comparative Example 3 except that the addition amount of cuprous oxide was changed to 2.0 g (the addition amount to the binder resin: 50 wt%).

### <Method for Evaluating Antifouling Property in Open System>

A method for evaluating the antifouling property in the open system was performed in accordance with the following procedures.

Each of the test pieces produced in the foregoing was fixed to a sample holder made of vinyl chloride, a weight was applied to the sample holder, and the test piece was suspended from a quay of a field test site using a rope, and subjected to an antifouling property evaluation test. The test piece was disposed so as to be constantly immersed in seawater, and pulled up after a one-month test period, and the adhesion number of polychaete worms was counted.

**[Table 2]**

| | Antifouling agent | Addition amount (mass%) | Adhesion number of polychaete worms |
|---|---|---|---|
| Comp. Ex. 3 | Cuprous oxide | 30 | 17 |
| Ex. 9 | La neodecanoate | 30 | 8 |
| Ex. 10 | Cu neodecanoate | 30 | 7 |
| Ex. 11 | Bi 2-ethylhexanoate | 30 | 11 |
| Ex. 12 | Zn 2-ethylhexanoate | 30 | 9 |
| Ex. 13 | Gd neodecanoate | 30 | 14 |
| Ex. 14 | Sm neodecanoate | 30 | 11 |
| Ex. 15 | La stearate | 30 | 3 |
| Ex. 16 | Bi stearate | 30 | 9 |
| Ex. 17 | Nd stearate | 30 | 11 |
| Comp. Ex. 4 | Cuprous oxide | 50 | 22 |
| Ex. 18 | La stearate | 50 | 3 |
| Ex. 19 | Bi stearate | 50 | 9 |
| Ex. 20 | Nd stearate | 50 | 11 |

As seen from the results of Examples 9 to 20 in Table 2, since the aquatic organism adhesion-inhibiting antifouling agent according to the present disclosure is added, the adhesion number of polychaete worms is lower than those using cuprous oxide, which is mainly used at present, as the aquatic organism adhesion-inhibiting antifouling agent of Comparative Examples 3 and 4, and a high antifouling property is obtained.

## Claims

1. An aquatic organism adhesion-inhibiting antifouling agent for preventing adhesion of an aquatic organism, the aquatic organism adhesion-inhibiting antifouling agent comprising a fatty acid metal salt including a fatty acid component having 1 to 22 carbon atoms and a metal component, wherein
the metal component is lithium, sodium, potassium, rubidium, cesium, boron, magnesium, aluminum, calcium, manganese, iron, cobalt, cobalt borate, nickel, antimony, copper, silver, zinc, molybdenum, vanadium, strontium, zirconium, barium, bismuth, lead, gold, platinum, or rare earth.

2. The aquatic organism adhesion-inhibiting antifouling agent according to claim 1, wherein the aquatic organism is a barnacle, a mussel, Limnoperna fortunei, or a polychaete worm.

3. The aquatic organism adhesion-inhibiting antifouling agent according to claim 1, wherein the fatty acid component is 2-ethylhexanoic acid, neodecanoic acid, isononanoic acid, naphthenic acid, stearic acid, isostearic acid, palmitic acid, lauric acid, or myristic acid.

4. The aquatic organism adhesion-inhibiting antifouling agent according to claim 1, wherein the metal component is copper, zinc, bismuth, lead, cobalt borate, or rare earth.

5. The aquatic organism adhesion-inhibiting antifouling agent according to claim 1, wherein
the fatty acid component is 2-ethylhexanoic acid, neodecanoic acid, or stearic acid, and
the metal component is copper, zinc, bismuth, or rare earth.

6. An aquatic organism adhesion-inhibiting antifouling agent composition comprising the aquatic organism adhesion-inhibiting antifouling agent according to any one of claims 1 to 5 and a solvent.

7. The organism adhesion-inhibiting antifouling agent composition according to claim 6, further comprising a binder resin.

8. An aquatic organism adhesion-inhibiting cured antifouling agent obtained by curing the aquatic organism adhesion-inhibiting antifouling agent composition according to claim 6.

9. An antifouling coating film formed from the aquatic organism adhesion-inhibiting cured antifouling agent according to claim 8.

10. A substrate equipped with an antifouling coating film comprising a substrate and the antifouling coating film according to claim 9 provided on a surface of the substrate.

11. The substrate equipped with an antifouling coating film according to claim 10, wherein the substrate is at least one selected from a ship, an underwater structure, a fishery material, and a supply and drainage pipe.
